Europäisches Patentamt

European Patent Office

Office européen des brevets

(11) Numéro de publication: **0 242 290 B1**

# FASCICULE DE BREVET EUROPEEN

(45) Date de publication de fascicule du brevet:
10.07.91

(51) Int. Cl.⁵: **B64D** 1/04, F41F 3/06

(21) Numéro de dépôt: 87400837.8

(22) Date de dépôt: 14.04.87

(54) Dispositif hydraulique d'éjection de charges portées sous avion.

(30) Priorité: 17.04.86 FR 8605517

(43) Date de publication de la demande:
21.10.87 Bulletin 87/43

(45) Mention de la délivrance du brevet:
10.07.91 Bulletin 91/28

(84) Etats contractants désignés:
DE ES GB IT

(56) Documents cités:
US-A- 3 974 990
US-A- 4 043 525
US-A- 4 377 103
US-A- 4 552 327

(73) Titulaire: R. ALKAN & Cie.
Rue du 8 mai 1945
F-94460 Valenton(FR)

(72) Inventeur: Grosselin, Daniel
3 avenue Maurice de Vlamink
F-77680 Roissy(FR)
Inventeur: Coutin, Pierre
117 avenue du Général M. Bizot
F-75012 Paris(FR)

(74) Mandataire: Hud, Robert
Cabinet COLLIGNON 6, rue de Madrid
F-75008 Paris(FR)

## Description

Le dispositif selon l'invention concerne l'emport d'armes, de bombes, de réservoirs et plus généralement de toute charge pouvant être larguée en vol à partir d'un avion

Lorsque ce largage a lieu dans des conditions difficiles : à grande vitesse et/ou lors d'évolutions rapides, il est important que la charge soit écartée très rapidement de l'avion, pour éviter qu'elle puisse rebondir contre celui-ci sous l'action d'effets aérodynamiques ou d'accélérations dirigées vers lui. Cet écartement dit "éjection" est effectué couramment par des poussoirs intégrés au dispositif d'emport et de largage et mus par une pression de fluide agissant sur des pistons liés aux poussoirs, comme décrit par exemple dans le brevet français n° 70.41162 (2 119 821).

On utilise généralement deux poussoirs disposés respectivement vers l'avant et vers l'arrière de la charge à larguer. Mais dans certains cas, la charge peut prendre, en cours d'écartement, une inclinaison telle que sa portance aérodynamique dans le vent relatif la ramènerait vers l'avion, ce qui annulerait le bénéfice attendu de l'éjection. Il est alors nécessaire de synchroniser exactement les mouvements des deux poussoirs, de façon à ce que les effets d'inertie n'aient plus d'action sur l'inclinaison relative de la charge, comme indiqué par exemple dans le brevet français n° 71.37349 (2 156 425).

Le document US-A-4 377 103 concerne un dispositif éjecteur double pour charges militaires emportées sous avion, qui est conçu pour appliquer à la charge lors du largage, en plus de la force d'éjection normale, une orientation angulaire déterminée. Ce dispositif comprend deux poussoirs d'éjection disposés vers l'avant et vers l'arrière de la charge et qui sont actionnés chacun au moyen d'un fluide hydraulique circulant dans un circuit indépendant sous l'action d'une de deux faces motrices d'un piston soumis à l'action d'un fluide moteur commun. Ce piston commande aussi une alimentation supplémentaire de l'un ou l'autre des poussoirs d'éjection par un système distributeur. Le circuit d'alimentation de chacun des deux poussoirs est en relation, par l'intermédiaire d'un clapet, avec un accumulateur hydraulique.

Selon la présente invention, le dispositif d'éjection comprend deux poussoirs mus par la pression d'un fluide incompressible, chacun par un circuit indépendant sous l'action d'une des deux faces motrices d'un piston, lequel est soumis à l'action d'un fluide moteur commun issu d'un moyen générateur, l'un au moins des circuits indépendants étant en relation avec un passage pouvant évacuer en dérivation une partie du fluide présent dans ce circuit dans une cavité accumulatrice, celle-ci se trouvant en aval d'un clapet qui est en relation avec ledit passage et il se caractérise en ce que ledit clapet est appuyé par un ressort taré dont l'effort est procuré par un écrou d'appui, la pression dans ledit circuit indépendant étant limitée à une valeur déterminée par l'angle de vissage de l'écrou.

Généralement le poussoir dont l'effort doit être le moindre est le poussoir arrière, afin d'obtenir l'effet de piqué.

On peut avantageusment n'utiliser qu'un seul clapet et/ou qu'une seule cavité accumulatrice reliée au moyen d'un robinet distributeur avec l'un ou l'autre des circuits, selon le montage du dispositif d'emport et de largage.

Dans un mode de réalisation préféré le jeu entre chacun des poussoirs et la charge est avantageusement rattrapé, en position d'emport, par l'effet d'une pression initiale dans chacun des circuits et/ou par des ressorts de butée en position rétractée de chacun des poussoirs.

Pour bien faire comprendre le dispositif selon l'invention on en décrira ci-après, à titre d'exemple sans caractère limitatif, une forme d'exécution préférée en référence au dessin schématique annexé dans lequel :

la figure 1 est une vue en coupe longitudinale partielle d'un dispositif d'éjection destiné à être associé à un dispositif d'emport et de largage de charge ;

la figure 2 est, à plus grande échelle, une coupe verticale longitudinale du bloc de réglage du dispositif d'éjection, prise selon la ligne II-II de la figure 3 ; et

la figure 3 est une coupe horizontale prise selon la ligne III-III de la figure 2.

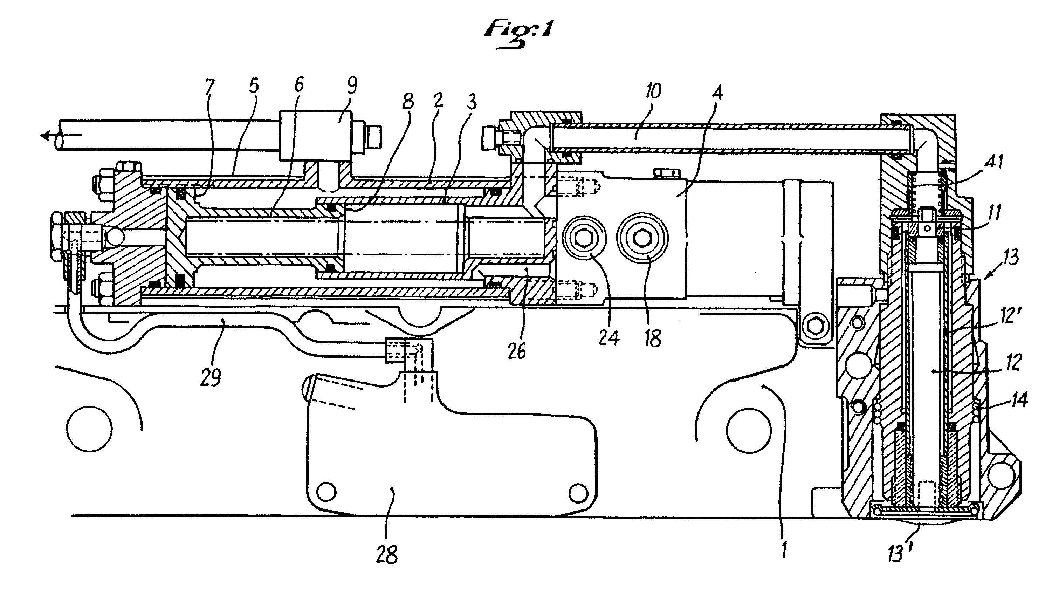

A la figure 1 on a représenté partiellement en 1, par des contours extérieurs, un appareil d'emport et de largage de charge connu en soi et qui peut être du type décrit en détail dans le brevet français n° 81.06750 (2 503 087). Cet appareil comporte un boîtier qui reçoit, en particulier, un dispositif hydraulique d'éjection selon l'invention et dont le carter comporte un cylindre extérieur 2, un cylindre intérieur 3 qui lui est concentrique et un bloc de réglage 4. Ces trois éléments, montés bout à bout avec étanchéité, sont reliés entre eux par de forts tirants boulonnés tels que 5. Un piston 6 à deux faces motrices 7 et 8 coulisse avec étanchéité dans les alésages des cylindres 2 et 3. La surface utile de la face 7 est le double de celle de la face 8 relative au cylindre intérieur 3, de sorte que les volumes balayés par chacune sont identiques. L'ensemble se comporte donc comme deux pistons égaux de même déplacement.

Le cylindre intérieur 3 est relié par une canalisation 10 à l'un des poussoirs 13 et le cylindre extérieur 2 est relié par une canalisation 9 à l'autre poussoir qui n'est pas représenté au dessin mais qui est exactement identique au poussoir 13 avec son piston 11, sa tige coulissante 12, sa plaque de poussée 13' et son ressort de traction 14 pour le rappel du poussoir en position rétractée. L'ensemble forme donc deux circuits hydrauliques distincts et généralement indépendants entre eux, qui sont chacun associé à l'un des poussoirs.

Les poussoirs peuvent être des poussoirs télescopiques pour effectuer un plus grand déplacement, la tige 12 étant intérieure à une autre tige mobile 12'.

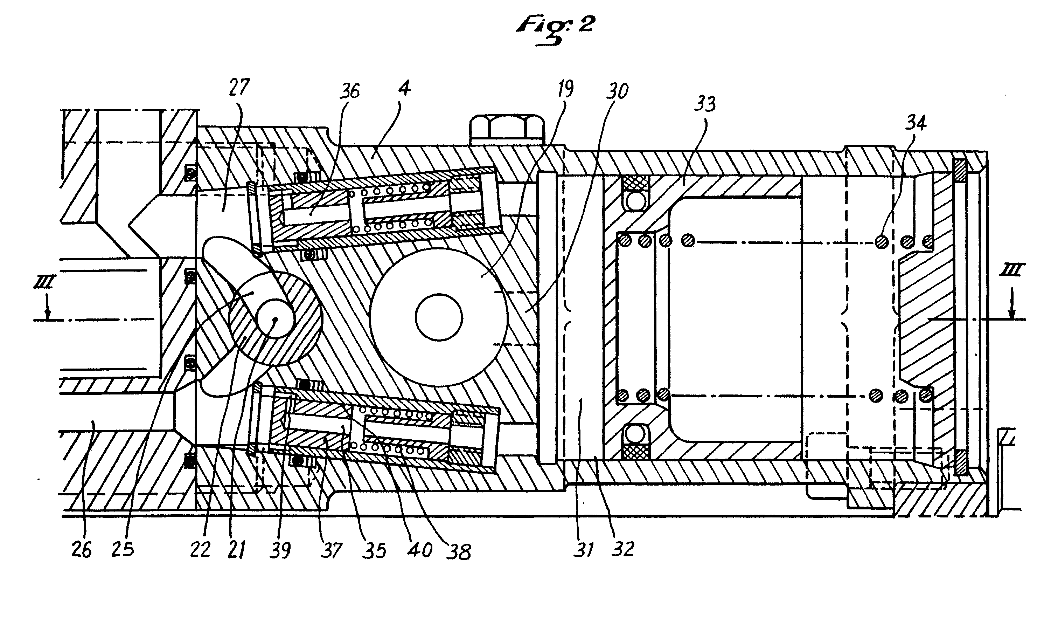

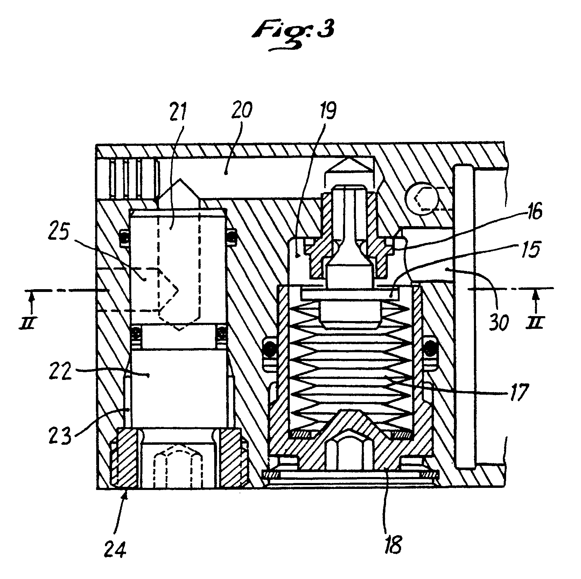

Le bloc de réglage 4, vu partiellement en coupe aux figures 2 et 3, contient le clapet 15, appuyé contre le siège 16 par un ressort 17 lui-même contenu dans un écrou creux 18 qui se loge avec étanchéité et par vissage dans un trou borgne transversal 19 du bloc 4. Le vissage de l'écrou 18 procure un effort progressif sur le ressort 17, cet effort pouvant être repéré de l'extérieur au moyen d'un trait gravé sur la face extérieure visible de l'écrou.

Le fond du trou borgne 19 communique par un canal interne 20 avec la sortie axiale 21 d'un robinet distributeur 22 à boisseau rotatif. Ce robinet est logé avec étanchéité dans un second trou borgne transversal 23 et retenu dans le bloc 4 par une couronne filetée 24. De cette façon, le robinet 22 est actionnable de l'extérieur, et sa position est repérable par un trait gravé sur sa face extérieure visible.

L'orifice radial 25 d'entrée du robinet 22 peut mettre en relation le clapet 15 soit avec le cylindre extérieur 2 au moyen d'un passage 26 ménagé dans la paroi de l'embase du cylindre 3 soit, comme dans la position figurée au dessin, avec le cylindre intérieur 3 au moyen d'un passage 27 ménagé dans le bloc 4. On voit que, dans la position représentée du robinet 22, la pression à l'intérieur du cylindre 3 (qui est celle agissant sur la tige 12 de poussoir) est limitée à la valeur déterminée par l'effort du ressort 17. Cette pression est donc éventuellement moindre que celle dans le cylindre 2, et ce d'une valeur due à l'angle de vissage adopté pour l'écrou 18. Les efforts sur les poussoirs sont proportionnels aux pressions dans les cylindres 2 et 3, et celles-ci sont provoquées par une poussée de gaz moteur sur la face arrière du piston 6, cette poussée étant réalisée de façon connue, dans l'exemple représenté, par un moyen pyrotechnique 28 générateur de gaz sous pression qui est raccordé par une canalisation 29 à l'extrémité fermée du cylindre 2, pour agir sur le piston 6 par sa face opposée à la face 7. La poussée de gaz moteur pourrait être obtenue par tout autre moyen connu convenable, par exemple par détente brusque d'un gaz contenu dans une bouteille sous forte pressi on.

En fonctionnement du dispositif selon l'invention, avec la position figurée pour le robinet 22, le poussoir 13 est poussé moins fortement que l'autre poussoir, ce qui fait que la charge s'incline vers le bas à gauche en regardant la figure 1, ce qui correspond ici à l'avant de l'avion porteur.

Dans le cas d'un montage symétrique du dispositif, où le poussoir 13 est vers l'avant de l'avion, on tourne le robinet 22 de façon que son entrée 25 reçoive le fluide hydraulique du passage 26, ce qui diminue la pression sur l'autre poussoir. Si on désire enfin une éjection sans inclinaison, on tourne le robinet dans le sens horaire en regardant la figure 1, pour isoler le clapet 15 et supprimer toute action du fluide sur lui.

Le dispositif comporte en outre des accessoires qui autorisent un échange de fluide à très faible débit entre les cylindres 2 et 3 et l'aval du clapet 15 comportant, dans le bloc 4, une cavité accumulatrice 31, constituée ici d'un cylindre 32 recevant avec étanchéité un piston coulissant 33 poussé par un ressort 34. Des orifices de très petite section 35 ou 36 court-circuitent le robinet 22 entre les passages 26 ou 27, respectivement et la cavité 31. Avant la mise en oeuvre du moyen pyrotechnique 28, ces orifices permettent le passage des petits écoulements de fluide que peuvent causer les variations thermiques ambiantes du fait des dilatations. Lors de l'action transitoire du moyen 28 ces petits orifices peuvent ne laisser passer qu'un débit négligeable. Ils peuvent aussi être obturés sous l'action de la forte pression en les faisant porter, comme dans l'exemple figuré, par un piston 37 enfoncé transitoirement par cette pression contre un ressort de rappel 38, ce mouvement d'enfoncement obturant un passage radial 39, en liaison avec l'orifice 35, par l'alésage 40 qui guide le piston.

A la suite de cette action transitoire, le ressort 34 repousse le piston 33, en faisant revenir le fluide à travers les orifices 35 et 36 et en ramenant le piston 6 en position initiale, tandis que les pistons des poussoirs tels que 11 remontent à l'intérieur du dispositif sous l'action des ressorts tels que 14.

La même capacité accumulatrice 31 reçoit aussi le fluide qui a éventuellement traversé le clapet 15, ceci au moyen du passage 30 la reliant au trou borgne 19, et elle le fait revenir de même, suite à l'éjection, à travers les orifices 35 et 36.

Il est cependant souhaitable que les plaques de poussée telles que 13 restent appuyées contre la charge même avant l'éjection de celle-ci. En effet, cette éjection étant très énergique, toute course morte des pistons occasionnerait un choc de mise en contact qui pourrait causer des dommages. Pour rattraper ce jeu, on dispose en butée rétractée de chaque poussoir un ressort tel que 41 dont la course utile est de peu supérieure au jeu maximal possible entre la plaque de poussée 13' et

la charge et dont la force, jointe à celle due à la pression résiduelle du fluide sous l'action du ressort 34, est supérieure à celle des ressorts de rappel tels que 14. Ainsi les poussoirs ne remontent pas complètement et restent appuyés sur la charge.

La capacité accumulatrice 31 pourrait aussi, de façon connue, être constituée par une bouteille contenant un gaz sous pression, de préférence avec une membrane souple séparant le fluide hydraulique d'avec le gaz dont l'élasticité jouerait le même rôle que le ressort 34.

On comprendra que la description ci-dessus a été donnée à simple titre d'exemple, sans caractère limitatif, et que des adjonctions ou des modifications constructives pourraient y être apportées sans sortir du cadre de l'invention définie par les revendications annexées.

## Revendications

1. Dispositif de poussoirs pour écarter ou rejeter une charge à partir d'un support, en particulier pour l'éjection de charges sous avions, comprenant deux poussoirs (13) mus par la pression d'un fluide incompressible, chacun par un circuit indépendant (9, 10) sous l'action d'une des deux faces motrices (7, 8) d'un piston (6), lequel est soumis à l'action d'un fluide moteur commun issu d'un moyen générateur (28), l'un au moins des circuits indépendants (9, 10) étant en relation avec un passage (26, 27) pouvant évacuer en dérivation une partie du fluide présent dans ce circuit (9, 10) dans une cavité accumulatrice (31), celle-ci se trouvant en aval d'un clapet (15) qui est en relation avec ledit passage (26, 27), caractérisé en ce que ledit clapet (15) est appuyé par un ressort taré (17) dont l'effort est procuré par un écrou d'appui (18), la pression dans ledit circuit indépendant (9, 10) étant limitée à une valeur déterminée par l'angle de vissage de l'écrou (18).

2. Dispositif selon la revendication 1, caractérisé en ce que la pression initiale résulte d'un élément élastique (34) repoussant le fluide incompressible dans les circuits indépendants (9, 10) et en ce qu'un passage (35, 36) de petite section fait communiquer entre eux les circuits indépendants pour équilibrer les pressions initiales.

3. Dispositif selon la revendication 2, caractérisé en ce que le passage de petite section (35, 36) est obturé lors de l'action motrice du moyen générateur (28), cette obturation étant obtenue au moyen de pistons (36, 37) enfoncés transitoirement sous la pression motrice à l'encontre d'un ressort de rappel (38).

4. Dispositif selon l'une quelconque des revendications 1 à 3, caractérisé en ce que le jeu initial entre les poussoirs (13) et la charge est rattrapé par des ressorts de butée (41) de longueur limitée pouvant écarter les poussoirs de leur position de rétraction maximale.

5. Dispositif selon l'une quelconque des revendications 1 à 4, caractérisé en ce qu'il comprend un robinet distributeur (22) conçu pour relier sélectivement le même clapet (15) avec l'un ou l'autre des circuits indépendants (9, 10) ou pour l'isoler de ceux-ci.

6. Dispositif selon la revendication 5, caractérisé en ce que les passages de petite section (35, 36), le clapet (15), le robinet (22) et la cavité accumulatrice (31) sont contenus dans un bloc (4) qui prolonge le cylindre (3) où coulisse le piston.

## Claims

1. Device comprising pusher members for removing or rejecting a load from a support, in particular for the ejection of loads underneath aircraft, comprising two pushers (13) propelled by the pressure of an incompressible fluid, each via an independent circuit (9, 10) under the action of one of the two driving faces (7, 8) of a piston (6) which is subject to the action of a common propellant fluid emanating from a generating means (28), at least one of the independent circuits (9, 10) being linked to a passage (26, 27) adapted to branch off a portion of the fluid present in the circuit (9, 10) into an accumulator cavity (31), which is located downstream of a valve (15), which is linked to the said passage (26, 27), characterised in that the said valve (15) is bearing on a calibrated spring (17) of which the force is provided by a supporting nut (18), the pressure in the said independent circuit (9, 10) being limited to a value determined by the angle to which the threaded joint of the nut (18) is screwed.

2. Device according to Claim 1, characterised in that the initial pressure results from a flexible element (34) pushing the incompressible fluid into the independent circuits (9, 10); and in that a passage (35, 36) with a small cross-section causes the independent circuits to communicate with each other to balance the initial pressures.

3. Device according to Claim 2, characterised in that the passage (35, 36) with a small cross-section is closed by the motor action of the generating means (28), this closing being obtained by means of pistons (36, 37) which are forced in under the drive pressure, against a return spring.

4. Device according to any one of Claims 1 to 3, characterised in that the initial clearance between the pushers (13) and the load is taken up by abutment springs (41) of limited length adapted to move the pushers away from their position of maximum retraction.

5. Device according to any one of Claims 1 to 4, characterised in that it comprises a distributor tap (22) adapted for selective connection or isolation of the same valve (15) to and from one or the other of the independent circuits (9, 10).

6. Device according to Claim 5, characterised in that the passages, (35, 36) with a small cross-section, the valve (15), the tap (22) and the accumulator cavity (31) are contained in a block (4) which extends the cylinder (3) in which the piston slides.

## Ansprüche

1. Ausstoßvorrichtung zum Entfernen oder Abwerfen einer Last von einem Träger, insbesondere für den Abwurf von Lasten unter Flugzeugen, umfassend zwei Stößel (13), die jeweils bewegt werden durch den Druck einer nicht zusammendrückbaren Flüssigkeit eines unabhängigen Kreises (9, 10) unter der Wirkung einer der beiden Treibflächen (7, 8) eines Kolbens (6), der der Wirkung einer von einem Druckerzeugungsmittel (28) abgegebenen gemeinsamen Treibflüssigkeit ausgesetzt ist, wobei mindestens einer der unabhängigen Kreise (9, 10) in Verbindung mit einem Durchgang (26, 27) steht, der einen Teil der in diesem Kreis (9, 10) anwesenden Flüssigkeit in einen Sammlerraum (31) abzweigen kann, der sich hinter einem Klappenventil (15) befindet, das Verbindung mit genanntem Durchgang (26, 27) hat, **dadurch gekennzeichnet**, daß das genannte Klappenventil (15) sich auf eine geeichte Feder (17) abstützt, deren Druck durch eine Stützmutter (18) beschafft wird, wobei der Druck des genannten unabhängigen Kreises (9, 10) auf einen durch den Verschraubungswinkel der Mutter (18) bestimmten Wert begrenzt ist.

2. Vorrichtung nach Anspruch 1, dadurch gekennzeichnet, daß der Anfangsdruck sich durch ein elastisches Element (34) ergibt, das die nicht zusammendrückbare Flüssigkeit in die unabhängigen Kreisen (9, 10) zurückdrückt, und daß ein Durchgang (35, 36) kleinen Querschnitts die beiden unabhängigen Kreise zum Ausgleich der Anfangsdrücke miteinander in Verbindung kommen läßt.

3. Vorrichtung nach Anspruch 2, dadurch gekennzeichnet, daß der Durchgang mit kleinem Querschnitt (35, 36) bei der Treibwirkung des Druckerzeugungsmittels (28) verschlossen ist und dieser Verschluß mittels Kolben (36, 37) erzielt wird, die vorübergehend unter dem Treibdruck gegen eine Rückholfeder (38) eingeschoben werden.

4. Vorrichtung nach einem der Ansprüche 1 - 3, dadurch gekennzeichnet, daß das Anfangsspiel zwischen den Stößeln (13) und der Last durch Anschlagfedern (41) von begrenzter Länge aufgenommen wird, die die Stößel aus ihrer maximalen Rückzugstellung herausbringen können.

5. Vorrichtung nach einem der Ansprüche 1 - 4, dadurch gekennzeichnet, daß sie eine Verteilerarmatur (22) umfaßt, die so beschaffen ist, daß sie selektiv das gleiche Klappenventil (15) mit dem einen oder anderen der unabhängigen Kreise (9, 10) verbindet oder von diesem trennt.

6. Vorrichtung nach Anspruch 5, dadurch gekennzeichnet, daß die Durchgänge mit kleinem Querschnitt (35, 36), das Klappenventil (15), die Armatur (22) und der Sammlerraum (31) in einem Block (4) enthalten sind, der den Zylinder (3), in dem der Kolben gleitet, verlängert.

Fig:1

EP 0 242 290 B1

Fig. 2

## Fig. 3